# EUROPÄISCHE PATENTSCHRIFT

(11) **EP 1 872 989 B1**
(45) Veröffentlichungstag und Bekanntmachung des Hinweises auf die Patenterteilung: **17.08.2011**
(21) Anmeldenummer: 07011999.5
(22) Anmeldetag: 19.06.2007
(51) Int. Cl.: B60J 1/20

(54) **Fensterrollo für ein Fahrzeugfenster**
Roller blind for a vehicle window
Store à enrouleur pour une fenêtre de véhicule

(30) Priorität: 20.06.2006 DE 102006028353
(43) Veröffentlichungstag der Anmeldung: 02.01.2008
(73) Patentinhaber: HS Products Engineering GmbH, 82239 Alling (DE)
(72) Erfinder: Ziegenbein, Werner, 81929 München (DE)
(74) Vertreter: Patentanwälte Bals & Vogel

(56) Entgegenhaltungen:
- WO-A-2004/096590
- DE-A1- 10 330 627
- DE-C1- 10 134 085

## Beschreibung

Die vorliegende Erfindung betrifft ein Fensterrollo für ein Fahrzeugfenster nach dem Oberbegriff des Patentanspruches 1.

Ein derartiges Fensterrollo ist aus DE 10 330 627 A bekannt. Ein weiteres Fensterrollo ist aus EP 1 645 448 A1 bekannt. Dieses bekannte Fensterrollo beinhaltet eine Rollowelle sowie eine auf die Rollowelle auf- und abwickelbare Rollobahn. Mittels einer Antriebseinrichtung, welche als elektrischer Gleichstrommotor ausgebildet sein kann, werden auf die Rollobahn erforderliche Antriebskräfte beim Auf- und Abwickeln der Rollobahn ausgeübt. Beim Aufwickeln der Rollobahn wird über die Rollowelle eine Einzugskraft und beim Abwickeln wird am ausziehbaren starr ausgebildeten Rollobahnende eine Auszugskraft auf die Rollobahn zur Einwirkung gebracht. Die Auszugskraft beim Abwickeln der Rollobahn wird mittels beidseits der Rollobahn angeordneter Bürstenkabel oder Seilzüge zur Einwirkung gebracht.

Aufgabe der Erfindung ist es, ein Fensterrollo der eingangs genannten Art zu schaffen, bei dem die Auszugskraft beim Abwickeln der Rollobahn mittels einfacher und raumsparender Kraftübertragungsmittel übertragen wird.

Diese Aufgabe wird durch die Merkmale des Patentanspruches 1 gelöst.

In den Unteransprüchen sind vorteilhafte Weiterbildungen der Erfindung angegeben.

Bei der Erfindung sind zwei Zahnräder, beispielsweise an beiden Seiten des starren Rollobahnendes drehbar angeordnet. Jedes der beiden Zahnräder greift kämmend in eine sich entlang einer seitlichen Fensterbegrenzung erstreckenden fahrzeugfesten Zahnstange ein, wobei diese seitliche Fensterbegrenzung auch ein Fensterteilungssteg zwischen zwei Seitenfenstern des Fahrzeug sein kann. Die Zahnstangen erstrecken sich in Bewegungsrichtung der Rollobahn beim Auf- oder Abwickeln von der Rollowelle und sind im wesentlichen vertikal angeordnet.

Mit dem jeweiligen Zahnrad ist eine erste Seilrolle drehfest verbunden, von welcher beim Abwickeln der Rollobahn ein Zugelement abgewickelt wird. Zur Übertragung der Auszugskraft beim Abwickeln der Rollobahn dient bei einem Ausführungsbeispiel ein längliches Zugelement, beispielsweise ein Seil, ein Band oder dergleichen, welches durch die Antriebseinrichtung von der Seilrolle abgewickelt wird.

Hierzu kann eine zweite Seilrolle vorgesehen sein, welche von der Antriebseinrichtung angetrieben wird und auf welche das Zugelement beim Abwickeln der Rollobahn aufgewickelt wird. Die Rollowelle kann mitdrehend mit der zweiten Seilrolle verbunden sein, wobei die zweite Seilrolle und somit die Rollowelle von der Antriebseinrichtung angetrieben werden können.

Bei einer weiteren Ausführungsform der Erfindung kann die Antriebseinrichtung zur Erzeugung der Auszugskraft beim Abwickeln der Rollobahn einen Federmotor aufweisen, welcher mit wenigstens einem der mindestens zwei Zahnräder in Drehantriebsverbindung steht. Bei dieser Ausführungsform wird beim Aufwickeln der Rollobahn über die Rollowelle die Einzugskraft erzeugt, wobei die Rollowelle von einem Elektromotor, insbesondere Gleichstrommotor angetrieben werden kann. Die Feder des Federmotors wird dabei gespannt, sodass der Federmotor bei einem nachfolgenden Abwickeln der Rollobahn die entsprechende Auszugskraft am ausziehbaren Rollobahnende erzeugen kann.

Das Rollobahnende kann mittels Schlittenführungen entlang der seitlichen Fensterbegrenzungen geführt werden. Hierzu können die beiden Zahnräder an den Schlitten drehbar gelagert sein, welche von entlang den Fensterbegrenzungen verlaufenden Schlittenführungen geführt werden. Die Rollobahn kann sich auch über zwei von einem Fensterteilungssteg voneinander getrennte Seitenfenster bewegt werden, wobei die eine Schlittenführung und die eine Zahnstange entlang dem Fensterteilungssteg angeordnet sind.

Bei der Erfindung wird eine exakte Führung des starren Rollobahnendes, welches als Auszugsstab ausgebildet sein kann, entlang den seitlichen Fensterbegrenzungen mittels der fahrzeugfesten Zahnstangen, in denen die an den beiden Seiten des Rollobahnendes drehbar gelagerten Zahnräder eingreifen, gewährleistet. Wie aus EP 1 645 448 A1 bekannt, kann eine federelastische Ausgleichseinrichtung vorgesehen sein, mit welcher unterschiedliche Auszugslängen an den beiden seitlichen Fensterbegrenzungen ausgeglichen werden können und ein Glattziehen der Rollobahn beim Auf- und Abwickeln gewährleistet wird. Ferner kann durch die federelastische Ausgleichseinrichtung eine Anpassung an den sich ändernden Winkeldurchmesser der Rollobahn auf der Rollowelle erreicht werden.

Anhand der Figuren werden Ausführungsbeispiele für Fensterrollos noch näher erläutert.

Es zeigt
- Fig. 1: ein erstes erfindungsgemäßes Ausführungsbeispiel;

- Fig. 2: in perspektivischer vergrößerter Darstellung eine Einzelheit A im Ausführungsbeispiel der Fig. 1;
- Fig. 3: in perspektivischer vergrößerter Darstellung eine Einzelheit B im Ausführungsbeispiel der Fig. 1;
- Fig. 4: in perspektivischer Darstellung ein zweites nicht erfindungsgemäßes Ausführungsbeispiel;
- Fig. 5: Einzelteile des in Fig. 4 dargestellten Ausführungsbeispiels;
- Fig. 6: ein weiteres Ausführungsbeispiel der Erfindung;
- Fig. 7: die Anordnung einer federelastischen Ausgleichseinrichtung im Ausführungsbeispiel der Fig. 6;
- Fig. 8: die Anordnung eines Federmotors an der linken Seite des ausziehbaren Rollbahnendes beim Ausführungsbeispiel der Fig. 6;
- Fig. 9: eine Ausführungsform für eine von Hand lösbare Verriegelungseinrichtung am ausziehbaren Rollobahnende; und
- Fig. 10: eine weitere Ausführungsform für eine Hand lösbare Verriegelungseinrichtung am ausziehbaren Rollobahnende.

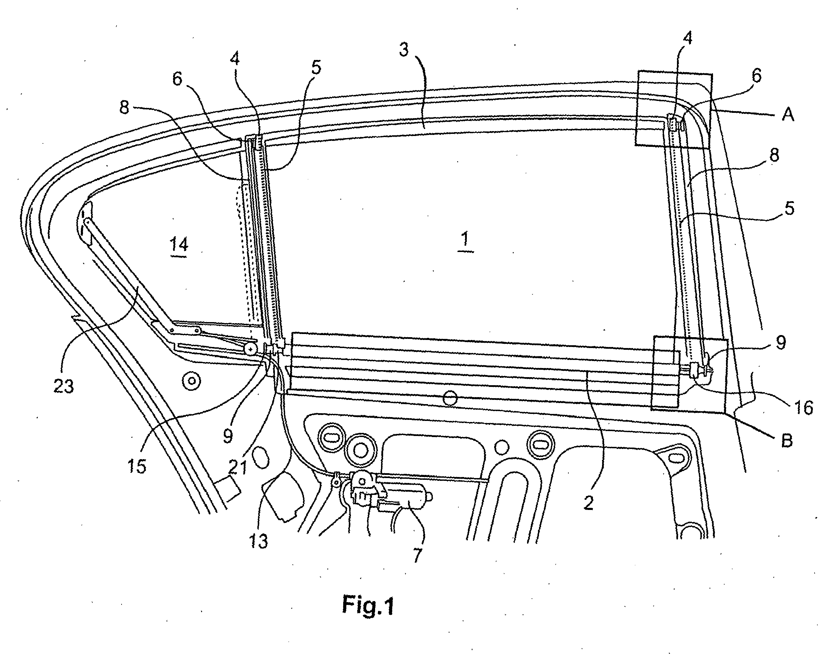

Ein Fensterrollo gemäß Fig. 1 beinhaltet eine Rollobahn 1, welche auf eine Rollowelle 2 auf- und abwickelbar ist. Das Fensterrollo dient für ein Seitenfenster eines Kraftfahrzeugs. Eine Antriebseinrichtung 7, welche vorzugsweise als Gleichstrommotor ausgebildet ist, liefert die zum Auf- und Abwickeln der Rollobahn 1 erforderlichen Antriebskräfte. Beim dargestellten Ausführungsbeispiel befindet sich die Rollobahn 1 in ihrer von der Rollowelle 2 abgewickelten Position. Dabei befindet sich ein ausziehbares Rollobahnende 3 in der obersten Position. Das Rollobahnende 3 ist starr ausgebildet und kann von einem starren Ausziehstab gebildet werden.

Um die Rollobahn 1 in die in der Fig. 1 dargestellte ausgezogene Position zu bringen, wird von der Antriebseinrichtung 7 ein Drehmoment erzeugt, welches über ein Bürstenkabel 13 auf ein drehfest mit der Rollowelle 2 verbundenes Getrieberad 15 übertragen wird. Das Getrieberad 15 kämmt mit dem Bürstenkabel 13. Das Getrieberad 15 ist drehfest mit einer die hohl ausgebildete Rollowelle 2 durchsetzenden Antriebswelle 21 verbunden. Beim Ausführungsbeispiel sind an beiden Enden der Rollowelle 2 Seilrollen 9 vorgesehen, welche ebenfalls drehfest mit der Antriebswelle 21 verbunden sind. Es ist jedoch auch möglich, das Drehmoment mittels eines Zahnradgetriebe, wie es aus EP 1 645 448 A1 bekannt ist, auf die Antriebswelle 21 zu übertragen. In Drehantriebsverbindung mit der Rollowelle 2 befindet sich eine der beiden Seilrollen 9.

Ferner sind an den beiden Enden bzw. an beiden Seiten des ausziehbaren starren Rollobahnendes 3 weitere Seilrollen 6 vorgesehen. Zwischen den jeweiligen Seilrollen 6 (erste Seilrollen) und den Seilrollen 9 (zweite Seilrollen) verläuft ein straff gezogenes Seil 8, welches als Zugelement dient. Anstelle eines Seils 8 kann auch ein anderes längliches Zugelement, beispielsweise ein Band oder dergleichen verwendet werden.

Die ersten Seilrollen 6 sind drehfest mit Zahnrädern 4 verbunden, welche mit beidseits des Fensters angeordneten fahrzeugfesten Zahnstangen 5 kämmen. Die Zahnstangen 5 verlaufen im wesentlichen in vertikaler Richtung und erstrecken sich entlang der seitlichen Fensterbegrenzungen.

Um das ausziehbare Rollobahnende 3 aus seiner unteren Ruheposition in der Nähe der Rollowelle 2 in die in Fig. 1 dargestellte obere Position zu bringen, wird das Antriebsmoment der Antriebseinrichtung 7 über das Bürstenkabel 13, das Getrieberad 15, die Antriebswelle 21 und die Seilrollen 9 auf die Rollowelle 2 übertragen, wie schon erläutert. Dabei werden die Seile 8 auf die zweiten Seilrollen 9 aufgewickelt und von den ersten Seilrollen 6 abgewickelt. Die Seilrollen 6 sind drehfest mit den Zahnrädern 4 verbunden. Beim Abwickeln der Seile 8 von den Seilrollen 6 werden die Seilrollen gedreht und die Zahnräder 4 werden aufgrund ihres Zahneingriffes in die Zahnstangen 5 bei der Drehung nach oben entlang der Zahnstangen 5 bewegt. Dabei wird die Rollobahn 1 von der Rollowelle 2 abgewickelt. Diese Nachobenbewegung kann in jeder Höhenlage durch Abschalten der Antriebseinrichtung 7 angehalten werden. Bei vollständigem Abwickeln der Rollobahn 1 liegt das starre Rollobahnende 3 an der oberen Fensterbegrenzung an, wie es in Fig. 1 dargestellt ist.

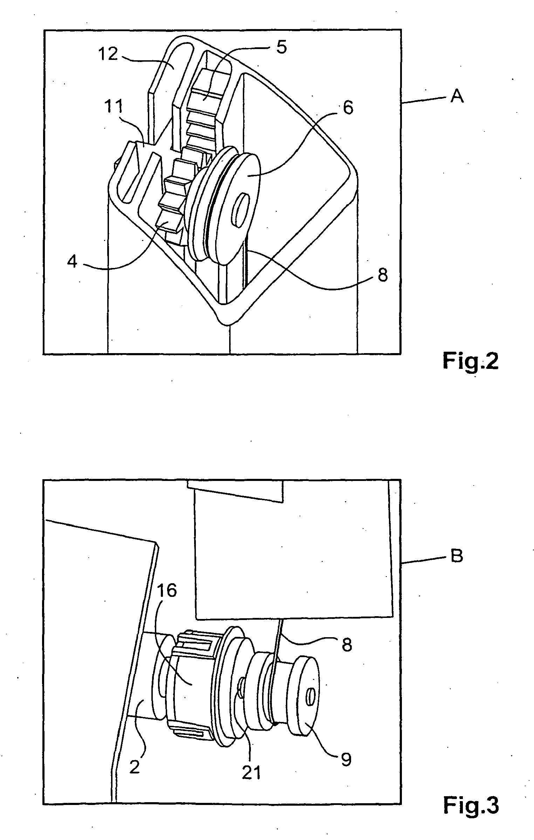

In der Fig. 2 ist die obere Position der in Fig. 1 rechten Seilrolle 6 und des drehfest damit verbundenen Zahnrades 4 dargestellt. Die von den ersten Seilrollen 6 abgewickelten Strecken der Seile 8 werden auf die unten liegenden zweiten Seilrollen 9 aufgewickelt. In der Fig. 3 ist die rechte, unten liegende Seilrolle 9 dargestellt.

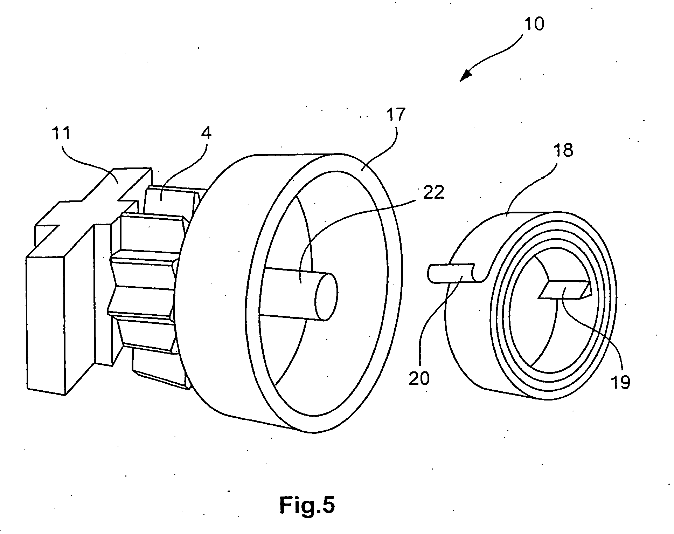

Um beim Abwickeln und beim Aufwickeln zwischen dem oberen ausziehbaren Rollobahnende 3 und dem auf die Rollowelle 2 aufgewickelten Rollobahnteil zum Glattziehen der Rollobahn eine ständig wirkende Vorspannung zu erzeugen, kann eine federelastische Ausgleichseinrichtung 16 zwischen der Rollowelle 2 und der durch die hohl ausgebildete Rollowelle 2 geführten Antriebswelle 21 vorgesehen sein. Die Antriebswelle 21 ist drehfest mit dem Getrieberad 15 und den beiden zweiten Seilrollen 9 verbunden. Die federelastische Ausgleichseinrichtung kann wie ein Federmotor ähnlich wie der in Fig. 5 dargestellte Federmotor ausgebildet sein. Hierzu besitzt die federelastische Ausgleichseinrichtung eine Federkassette ähnlich einer Federkassette 17 in Fig. 5, in welcher eine Rollfeder oder Spiralfeder ähnlich einer Rollfeder oder Spiralfeder 18 in Fig. 5 angeordnet ist. Ein äußeres Federende 20 ist an der Innenseite der Federkassette 17 und ein inneres Federende 19 ist an der Antriebswelle 21 befestigt. Die Federkassette 17 ist drehfest mit der Rollowelle 2 verbunden. Ferner kann die Rollowelle 2 gegenüber der Antriebswelle 21 in axialer Richtung verschoben werden, wie es aus EP 1 845 448 A1 bekannt ist. Durch diese axiale Beweglichkeit der Rollowelle 2 können ein Schrägauszug und/oder unterschiedliche Breiten der Rollobahn 1 beim Auf- und Abwickeln kompensiert werden. Ferner ist es möglich, die Übersetzung des rechten Seilrollenpaares 6, 9 gegenüber dem linken Seilrollenpaar 6, 9 in Fig. 1 unterschiedlich zu gestalten, um unterschiedliche Auszugslängen an der rechten und linken Fensterbegrenzung auszugleichen.

Wie aus Fig. 2 zu ersehen ist, können die jeweils obere Seilrolle 6 und das drehfest damit verbundene Zahnrad 4 drehbar an einem Schlitten 11 gelagert sein, der in einer Schlittenführung 12 entlang den beiden seitlichen Fensterbegrenzungen in vertikaler Richtung geführt ist. Die beiden Enden des starren Rollobahnendes 3, welches als Auszugstab ausgebildet sein kann, sind mit den beiden Schlitten 11 verbunden. Wie aus dem Deutschen Gebrauchsmuster DE 299 21 859.7 bekannt ist, kann zwischen dem Schlitten 11 und dem starr ausziehbaren Rollobahnende 3 ein Längenausgleich vorgesehen sein, um unterschiedliche Längen der unteren und oberen Fensterbegrenzungen auszugleichen.

Zum Aufwickeln der Rollobahn 1 auf die Rollowelle 2 wird die Antriebseinrichtung 7 in entgegengesetzter Richtung betrieben, sodass über die Antriebswelle 21 die unten liegenden Seilrollen 9 mit umgekehrten Drehrichtungen angetrieben werden. Die für das Aufwickeln erforderliche Einzugskraft wird von der Rollowelle 2 direkt auf die Rollobahn 1 übertragen. Die beim Abwickeln auf die Seilrollen 9 aufgewickelten Seilstrecken werden auf die oben liegenden Seilrollen 6, welche an den Zahnstangen 5 nach unten geführt werden, aufgewickelt und von den Seilrollen 9 abgewickelt.

Beim Ausführungsbeispiel der Fig. 1 bis 3 sind die Seile 8 um die Seilrollen 6 und 9 so gewickelt, dass beim Aufwickeln und beim Abwickeln des Rollobandes die Seilrollen 6 und 9 jeweils entgegengesetzt zueinander gedreht werden.

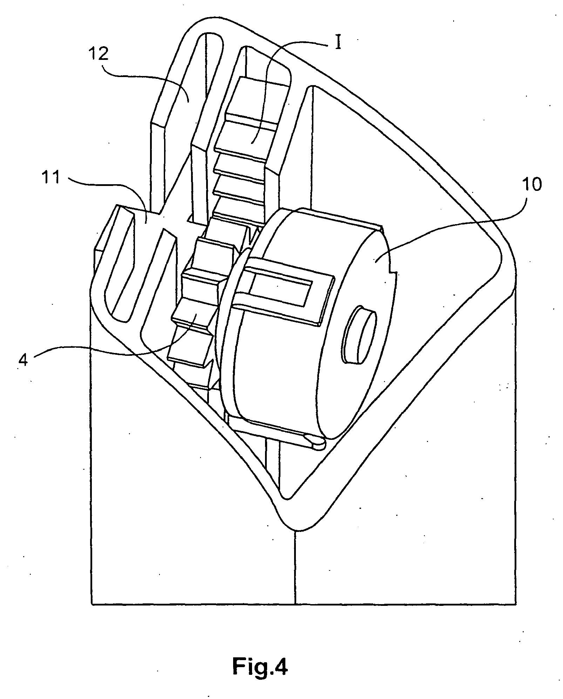

In den Fig. 4 und 5 ist eine nicht erfindungsgemäße Ausführungsform eines Fensterrollos dargestellt, bei welchem die Seilrollen 6 und 9 sowie die Seile 8 überflüssig sind. Die übrigen Bestandteile gleichen denen im Ausführungsbeispiel der Fig. 1 bis 3. Bei dieser Ausführungsform ist an wenigstens einer Seite des ausziehbaren Rollobahnendes 3 ein Federmotor 10 vorgesehen. Der Federmotor 10 besteht aus einer Federkassette 17, in welcher eine Rollfeder oder Spiralfeder 18 angeordnet ist.

Ein äußeres Federende 20 ist an der Innenseite der Federkassette 17 befestigt und ein inneres Federende 19 ist an einer Achse 22 befestigt, welche fest mit dem Schlitten 11 verbunden ist. Wie beim ersten Ausführungsbeispiel ist das Zahnrad 4 vorgesehen, welches mit der Zahnstange 5 kämmt. Das Zahnrad 4 ist drehfest mit der Federkassette 17 verbunden. Das Zahnrad 4 und die Federkassette 17 sind somit drehbar an der am Schlitten 11 befestigten Achse 22 gelagert.

Wenn das Rollobahnende 3 seine unterste Position einnimmt, befindet sich der Federmotor 10 ebenfalls in der untersten Position. Dabei ist die Roll- oder Spiralfeder 18 gespannt. Bei ausgeschaltetem Antrieb 7 wird das ausziehbare Rollobahnende 3 in dieser untersten Position gehalten. Bei eingeschaltetem Antrieb 7 wird die Rollobahn 1 für eine Bewegung nach oben freigegeben. Aufgrund des von der gespannten Roll- oder Spiralfeder 18 erzeugten Drehmoments wird die Federkassette 17 und das drehfest damit verbundene Zahnrad 4 gedreht, sodass auf das mit dem Schlitten 11 verbundene Rollobahnende 3 eine Auszugskraft einwirkt und die Rollobahn 1 von der Rollowelle 2 abgewickelt wird.

Wie beim Ausführungsbeispiel der Fig. 1 bis 3 sind sowohl an der linken als auch an der rechten Fensterbegrenzung Zahnstangen 5 und damit kämmende Zahnräder 4, welche an beiden Seiten des Rollobahnendes 3, insbesondere an den Schlitten 11 drehfest gelagert sind, vorgesehen. Für die Auszugsbewegung genügt es, wenn an einer der beiden Seiten des Rollobahnendes 3 der Federmotor 10 vorgesehen ist. Es ist natürlich auch möglich, an beiden Seiten des Rollobahnendes Federmotoren 10 vorzusehen.

Der Federmotor 10 kann auch so ausgestaltet sein, dass die Federkassette 17 gegenüber dem Schlitten 11 nicht verdreht wird und das Zahnrad drehfest auf der dann als Welle ausgebildeten Achse 22 sitzt und diese Welle drehbar am Schlitten 11 und gegebenenfalls an der Federkassette 17 gelagert ist. Die Federkassette 17 ist in diesem Fall, beispielsweise unverdrehbar und unverschiebbar entlang der Schlittenführung 12 gehalten oder drehfest mit dem Schlitten 11 verbunden.

Beim Aufwickeln der Rollobahn 1 wird die Antriebseinrichtung 7 mit umgekehrter Drehrichtung angetrieben, sodass von der Rollowelle 2 eine Einzugskraft auf die Rollobahn 1 ausgeübt wird, wie beim Ausführungsbeispiel der Fig. 1 bis 3. Dabei wird, wie schon erwähnt, die Roll- oder Spiralfeder 18 des Federmotors 10 gespannt. Beim Ausführungsbeispiel der Fig. 4 und 5 kann das Antriebsmoment auch ohne Verwendung der Antriebswelle 21 auf die Rollowelle 2 übertragen werden.

Bei den beiden Ausführungsbeispielen kann gleichzeitig eine Dreieckfenster-Rollobahn 14 betätigt werden.

Hierzu wird von der Antriebseinrichtung 7 das Bürstenkabel 13 in entsprechender Richtung angetrieben. Bei einer Bewegung des Bürstenkabels nach links wird wie schon erläutert, die Antriebswelle 21 so gedreht, dass die Rollobahn 1 von der Rollowelle 2 abgewickelt wird. Gleichzeitig wird ein an der Dreieckfenster-Rollobahn 14 angreifender Kipphebel 23 nach links verschoben, sodass, wie aus DE 299 21 859 U1 bekannt, die Dreieckfenster-Rollobahn 14 nach links in ihre in der Fig. 1 dargestellte ausgezogene Position gebracht wird. Bei Drehrichtungsumkehr der Antriebseinrichtung 7 werden die Rollobahn 1 und die Dreieckfenster-Rollobahn 14 in die Ausgangspositionen wieder zurückgebracht.

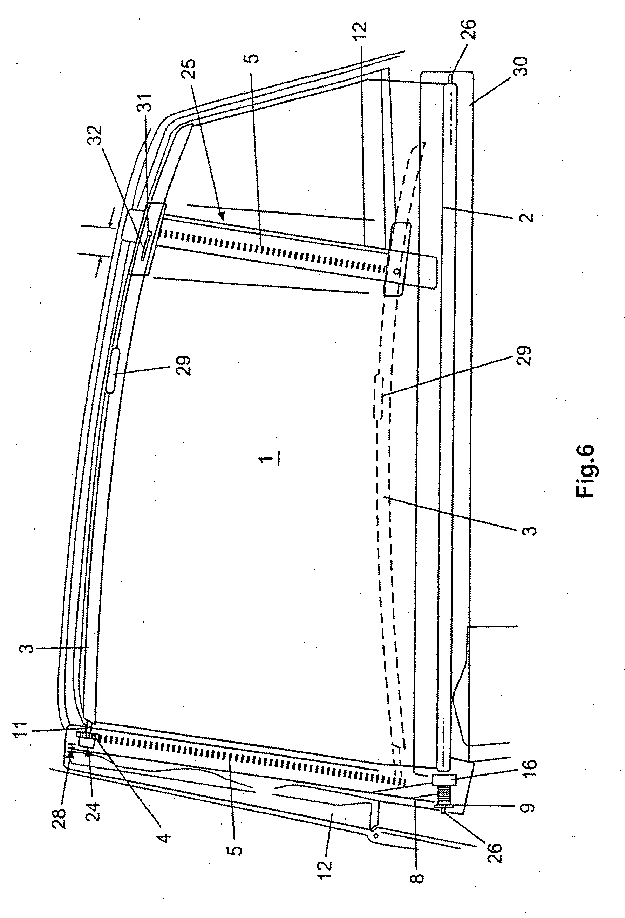

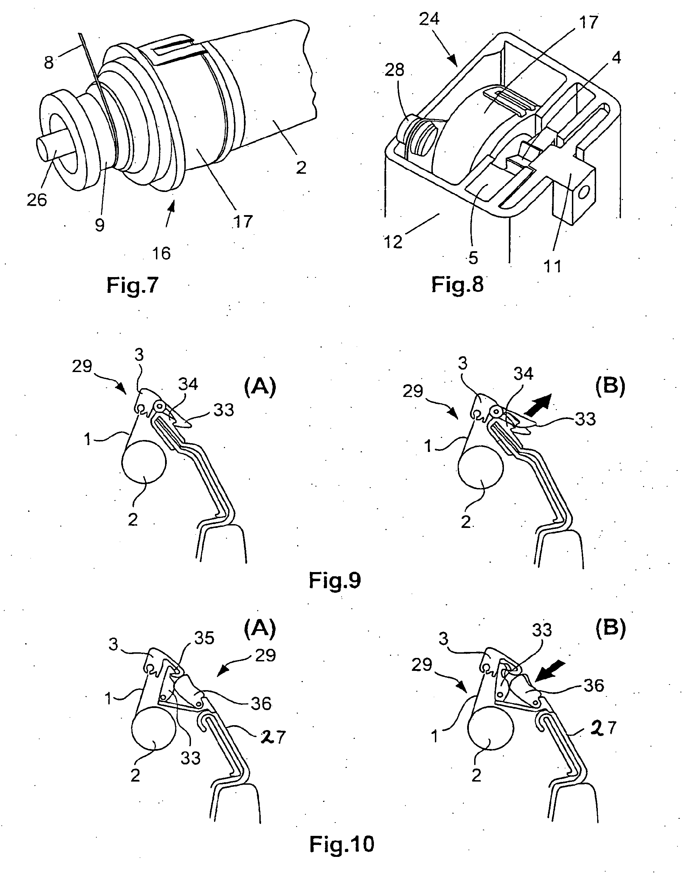

Bei dem in Fig. 6 dargestellten Ausführungsbeispiel ist an einer Seite des ausziehbaren Rollobahnendes 3, welches als Ausziehstab ausgebildet ist, ein Federmotor 24 angeordnet. Die Anordnung des Federmotores 24 ist im einzelnen in Fig. 8 dargestellt. Der Federmotor 24 besteht, wie in Fig. 5 gezeigt ist, aus der Federkassette 17, in welcher die Spiral- oder Rollfeder 18 angeordnet ist. Bei einer ersten Ausführungsform ist das äußere Federende 20 mit der Federkassette 17 fest verbunden und das innere Federende 19 ist an der am Schlitten 11 befestigten Achse 22 befestigt. Drehfest mit der Federkassette 17 ist das Zahnrad 4 verbunden. Das Zahnrad 4 kämmt mit der fahrzeugfesten Zahnstange 5, wie bei den vorherigen Ausführungsbeispielen. Das Zahnrad 4 und die Federkassette 17 sind bei dieser Ausführungsform drehbar an der am Schlitten 11 befestigten Achse 22 gelagert. Bei einer zweiten Ausführungsform ist die Federkassette 17, an welcher das äußere Federende 20 befestigt ist, drehfest mit dem ausziehbaren Rollobahnende 3 und insbesondere mit dem Schlitten 11 verbunden. Das innere Federende 19 ist mit dem Zahnrad 4 verbunden, welches drehbar an dem am Schlitten befestigten Achse 22 gelagert ist.

Das Zugelement 8, welches von der Seilrolle 6 kommt, wird über eine Umlenkrolle 28, welche fahrzeugfest, insbesondere an der Schlittenführung 12 drehbar gelagert ist, umgelenkt und ist am Federmotor 24 mit dem einen Ende befestigt. Das andere Ende des Zugelementes 8 ist an der Seilrolle 9 befestigt. Die Seilrolle 9 ist drehbar an einer Rolloachse 26 gelagert, an welcher auch die Rollowelle 2 drehbar gelagert ist. Die Rolloachse 26 ist beispielsweise an ihren Enden an einer Rollobefestigungseinrichtung 30 fahrzeugfest gelagert. Zwischen der Seilrolle 9 und der Rollowelle 2 befindet sich die federelastische Ausgleichseinrichtung 16. Diese besitzt den gleichen Aufbau wie der in Fig. 5 dargestellte Federmotor.

Wie aus Fig. 7 zu ersehen ist, besitzt die federelastische Ausgleichseinrichtung die Federkassette 17, in welcher die Spiral- oder Rollfeder 18 angeordnet ist. Das äußere Federende 20 ist mit der Federkassette 17 verbunden und das innere Federende 19 ist mit der Seilrolle 9 verbunden. Die Federkassette 17 ist drehfest mit der Rollowelle 2 verbunden.

Die rechte seitliche Fensterbegrenzung wird beim dargestellten Ausführungsbeispiel der Fig. 6 von einem Fensterteilungssteg 25 gebildet, der das relativ große Seitenfenster gegenüber dem relativ kleinen etwa dreieckförmigen Seitenfenster abgrenzt. Entlang dem Fensterteilungssteg 25 ist ebenfalls die Zahnstange 5 angeordnet sowie die Schlittenführung 12. Das ausziehbare Rollobahnende 7 in Form eines Ausziehstabes erstreckt sich über den Fensterteilungssteg 25 hinaus, sodass die Rollobahn 1 zur Abdeckung beider Fenster verwendet werden kann, wie es in Fig. 6 dargestellt ist. Die Rollowelle 2 erstreckt sich ebenfalls über beide Seitenfenster. Am Ausziehstab ist ebenfalls ein nicht sichtbarer Federmotor mittels eines Schlittens befestigt, der, wie in Fig. 4 dargestellt ist, in der Schlittenführung 12 geführt wird. Der Federmotor besitzt die gleiche Ausführungsform, wie anhand der Fig. 4 und 8 erläutert wurde. Ein Zugelement mit zugeordneter Umlenkrolle und Befestigungsstelle am Federmotor sowie zugeordneter Seilrolle im Bereich der Rollowelle sind beim an der rechten Seitenfensterbegrenzung angeordneten Federmotor nicht vorgesehen.

Zum Ausgleich der unterschiedlichen Breiten des Fensters bzw. der unterschiedlichen Abstände der vertikalen Schlittenführungen 12 in der Nähe der Rollowelle 2 und an der oberen Fensterbegrenzung sind der das ausziehbare Rollobahnende 3 bildende Auszugsstab und der Schlitten 11 an der rechten Schlittenführung 12 verschiebbar gegeneinander gelagert, wie das beispielsweise aus DE 10 2004 060 200.8 A1 bekannt ist. Im Ausziehstab bzw. ausziehbaren Rollobahnende 3 ist hierzu ein Ausgleichsschlitz 32 vorgesehen, der sich in Längsrichtung des Ausziehstabes bzw. Rollobahnendes 3 erstreckt. Am Schlitten 11 ist ein Befestigungsstift vorgesehen, welcher durch einen Ausgleichsschlitz 32 ragt. Beim Ausführungsbeispiel der Fig. 6 ist der Schlitten 11 verdeckt angeordnet, sodass nur der Befestigungsstift 31 sichtbar ist.

Beim dargestellten Ausführungsbeispiel der Fig. 6 befindet sich der Federmotor 24 mit dem zusammenwirkenden Zugelement 8 an der linken Seite des Fensters und der Federmotor 24 ohne das Zugelement an der rechten Seite des Fensters. Es ist jedoch auch möglich, diese Anordnung zu vertauschen.

Aus den Fig. 9 und 10 sind zwei Ausführungsformen für Verriegelungseinrichtungen 29 zum Festhalten der Rollobahn 1 in der unteren strichliert in Fig. 6 dargestellten Position gezeigt. In dieser Position sind die beiden Federmotore 24 bzw. die Spiral- oder Rollfedern 18 der beiden Federmotore vorgespannt. Ein Auszug der Rollobahn 1 in die obere mit ausgezogenen Linien in Fig. 6 dargestellte Position wird durch die Verriegelungseinrichtung 29 verhindert. Diese Verriegelungseinrichtung weist beim Ausführungsbeispiel der Fig. 9 ein hakenförmiges Verriegelungsteil 33 auf, das am ausziehbaren Rollobahnende 3 schwenkbar gelagert ist. In der verriegelten Position (A) greift das hakenförmige Verriegelungsteil 33 in ein fahrzeugfestes Eingriffsteil 34 ein. In dieser Position wird die Rollobahn 1 in der auf der Rollowelle 2 aufgewickelten Stellung gehalten. Zum Lösen der Verriegelungseinrichtung 29 wird das hakenförmige Verriegelungsteil 33 von Hand aus dem Eingriff mit dem fahrzeugfesten Eingriffsteil 34 in die gelöste Position (B) geschwenkt. Hierzu kann das hakenförmige Verriegelungsteil 33 als Handgriff ausgebildet sein.

Bei dem in Fig. 10 dargestellten Ausführungsbeispiel ist das hakenförmige Verriegelungsteil 33 schwenkbar an einem fahrzeugfesten Teil 37 gelagert und greift in ein Eingriffsteil 35 am Rollobahnende 3 ein. In dieser Verriegelungsposition (A) wird die Rollobahn 1 in ihrer auf der Rollowelle 2 aufgewickelten Position gehalten. Zum Lösen der Verriegelungseinrichtung 29 wird eine schwenkbar am fahrzeugfesten Teil 37 gelagerte Entriegelungstaste 36 von Hand betätigt, sodass das ausziehbare Rollobahnende 3 aus dem Verriegelungseingriff freigegeben wird, wie es in der Darstellung (B) der Fig. 10 gezeigt ist.

Beim Lösen der Verriegelungseinrichtung 29 wird das ausziehbare Rollobahnende 3 freigegeben, sodass aufgrund der Vorspannungen in den Federmotoren 24 die Zahnräder 4 angetrieben werden und das Rollobahnende 3 in Richtung zur oberen Position bewegt wird. Zusammen mit der Rollowelle wird dabei die zweite Seilrolle 9 mitgedreht und das über die Umlenkrolle 8 geführte Zugelement 8 auf die Seilrolle 9 aufgewickelt. Bei dieser Ausführungsform wird somit aufgrund der von den Federmotoren 24, welche am ausziehbaren Rollobahnende 3 vorgesehen sind, die Rollbahn 1 von der Rollowelle 2 abgewickelt.

Zum Aufwickeln der Rollobahn 1 auf die Rollowelle 2 wird das ausziehbare Rollobahnende 3 von Hand nach unten verschoben, wobei die entlang der Zahnstangen 5 geführten Zahnräder in entgegengesetzter Richtung angetrieben werden. Dabei werden die Spiral- und Rollfedern 18 der Federmotore 24 gespannt. Die Rollowelle 2 wird in Aufwickelrichtung durch das von der Seilrolle 9 abgewickelte Zugelement angetrieben. Dabei wird das mit dem Federmotor 24 verbundene Ende des Zugelementes nach unten gezogen und aufgrund der Umlenkung des Zugelementes 8 um die Umlenkrolle 28 erfolgt das Abwickeln des Zugelementes 8 von der Seilrolle 9.

Zwischen der Seilrolle 9 und der Rollowelle 2 befindet sich die federelastische Ausgleichseinrichtung 16, welche, wie schon erläutert, nach Art des Federmotors ausgebildet sein kann. Durch die federelastische Ausgleichseinrichtung 16 erfolgt eine Anpassung des sich ändernden Wickeldurchmessers, der auf die Rollowelle aufgewickelten Rollobahn.

Die beim Ausziehen der Rollobahn erforderlichen Auszugskräfte werden bei der in Figur 6 dargestellten Ausführungsform von den beiden Federmotoren 24 am ausziehbaren Rollobahnende 3 geliefert, . wobei beim Zurückbringen der Rollobahn in die untere Position die Federmotore 24 in ihre vorgespannten Zustände gebracht werden. Die aufgewickelte Position der Rollobahn 1 (strichlierte Position in Fig. 6) wird, wie schon erläutert, mit Hilfe einer Verriegelungseinrichtung 29 aufrechterhalten, welche dann, wenn das ausziehbare Rollobahnende 3 die untere Position erreicht hat, selbsttätig in den verriegelten Zustand kommt und, wie schon erläutert, von Hand gelöst werden kann.

Anstelle des beim Ausführungsbeispiel der Fig. 6 verwendeten Seilzuges oder Zugelement kann auch ein Seilzug verwendet werden, wie er in den Fig. 2 und 3 dargestellt und erläutert wurde. Dadurch wird die Rollowelle 2 ebenfalls beim Auf- und Abwickeln der Rollobahn 1 in der gewünschten Richtung angetrieben. Anstelle eines Zugelementes kann auch ein anderes bewegungsübertragendes Mittel oder Antriebsmittel, beispielsweise ein Spindeltrieb oder dergleichen verwendet werden.

### Bezugszeichenliste:

- 1: Rollobahn
- 2: Rollowelle
- 3: ausziehbares Rollobahnende
- 4: Zahnrad
- 5: Zahnstange
- 6: erste Seilrollen
- 7: Antriebseinrichtung
- 8: Zugelement (Seil, Band)
- 9: zweite Seilrollen
- 10: Federmotor
- 11: Schlitten
- 12: Schlittenführung
- 13: Bürstenkabel
- 14: Dreieckfenster-Rollobahn
- 15: Getrieberad
- 16: federelastische Ausgleichseinrichtung
- 17: Federkassette
- 18: Roll- oder Spiralfeder
- 19: inneres Federende
- 20: äußeres Federende
- 21: Antriebswelle
- 22: Achse
- 23: Kipphebel

- 24: Federmotor
- 25: Fensterteilungssteg
- 26: Rolloachse
- 27: fahrzeugfestes Teil
- 28: Umlenkrolle
- 29: Verriegelungseinrichtung
- 30: Rollobefestigungseinrichtung
- 31: Befestigungsstift
- 32: Ausgleichsschlitz
- 33: hakenförmiges Verriegelungsteil
- 34: fahrzeugfester Eingriffsteil
- 35: Eingriffsteil am Rollobahnende
- 36: Entriegelungstaste

## Patentansprüche

1. Fensterrollo für ein Fahrzeugfenster mit einer Rollowelle (2), einer auf die Rollowelle (2) auf- und abwickelbaren Rollobahn (1), einer Antriebseinrichtung (7), welche die zum Auf- und Abwickeln der Rollobahn (1) erforderlichen Antriebskräfte liefert, wobei beim Aufwickeln der Rollobahn (1) über die Rollowelle (2) eine Einzugskraft auf die Rollobahh (1) und beim Abwickeln der Rollobahn (1) eine Auszugskraft am ausziehbaren starren Rollobahnende (3) wirken, wobei an wenigstens zwei Stellen des starren Rollobahnendes (3) jeweils ein Zahnrad (4) drehbar angeordnet ist und jedes Zahnrad (4) in eine sich in Richtung der Rollobahnbewegung beim Auf- und Abwickeln erstreckenden fahrzeugfesten Zahnstange (5) eingreift-,
**dadurch gekennzeichnet, dass** mit dem Zahnrad (4) eine erste Seilrolle (6) drehfest verbunden ist, von welcher beim Abwickeln der Rollobahn (1) ein Zugelement (8) abgewickelt wird.

2. Fensterrollo nach Anspruch 1, **dadurch gekennzeichnet, dass** eine zweite Seilrolle (9) vorgesehen ist, auf welche das Zugelement (8) beim Abwickeln der Rollobahn (1) aufgewickelt wird.

3. Fensterrollo nach Anspruch 2, **dadurch gekennzeichnet, dass** die Rollowelle (2) mit der zweiten Seilrolle (9) mitdrehend verbunden ist.

4. Fensterrollo nach einem der Ansprüche 2 oder 3, **dadurch gekennzeichnet, dass** zwischen der zweiten Seilrolle (9) und der Rollowelle (2) eine federelastische Ausgleichseinrichtung (16) zum Ausgleich des sich ändernden Wickeldurchmessers der Rollobahn (1) auf der Rollowelle (2) vorgesehen ist.

5. Fensterrollo nach einem der Ansprüche 1 bis 4, **dadurch gekennzeichnet, dass** das starre Rollobahnende (3) mit Schlitten (11), welche von in Bewegungsrichtung der Rollobahn (1) verlaufenden Schlittenführungen (12) geführt sind, verbunden ist und die Zahnräder (4) an den Schlitten (11) drehbar gelagert sind.

6. Fensterrollo nach einem der Ansprüche 1 bis 5, **dadurch gekennzeichnet, dass** zur Übertragung der Auszugskraft beim Abwickeln der Rollobahn (1) das Zugelement (8) von der Antriebseinrichtung (7) von der ersten Seilrolle (6) abgewickelt wird.

7. Fensterrollo nach einem der Ansprüche 2 bis 6, **dadurch gekennzeichnet, dass** das von der ersten Seilrolle (6) abgewickelte Zugelement (8) auf die zweite Seilrolle (9), welche von der Antriebseinrichtung (7) angetrieben ist, aufgewickelt wird.

8. Fensterrollo nach einem der Ansprüche 2 bis 7, **dadurch gekennzeichnet, dass** zwei zweite Seilrollen (9), welche von der Antriebseinrichtung (7) antreibbar sind, vorgesehen sind.

9. Fensterrollo nach Anspruch 8, **dadurch gekennzeichnet, dass** die beiden zweiten Seilrollen (9) von der Antriebseinrichtung (7) in beiden Antriebsrichtungen antreibbar sind.

10. Fensterrollo nach einem der Ansprüche 8 oder 9, **dadurch gekennzeichnet, dass** die beiden zweiten Seilrollen (9) mit einer gemeinsamen Antriebswelle (21) drehfest verbunden sind.

11. Fensterrollo nach Anspruch 10, **dadurch gekennzeichnet, dass** die gemeinsame Antriebswelle (21) innerhalb der als Hohlwelle ausgebildeten Rollowelle (2) angeordnet ist und die beiden zweiten Seilrollen (9) an überstehenden Enden der Abtriebswelle (21) befestigt sind.

12. Fensterrollo nach einem der Ansprüche 8 bis 11, **dadurch gekennzeichnet, dass** die Antriebskraft der Antriebseinrichtung (7) über ein Bürstenkabel (13) auf die beiden zweiten Seilrollen (9) übertragbar ist.

13. Fensterrollo nach Anspruch 12, **dadurch gekennzeichnet, dass** mit dem Bürstenkabel (13) die Antriebskraft der Antriebseinrichtung (7) ferner auf eine Dreieckfenster-Rollobahn (14) übertragbar ist.

14. Fensterrollo nach einem der Ansprüche 1 bis 5, **dadurch gekennzeichnet, dass** die Antriebseinrichtung wenigstens einen Federmotor (24) aufweist, welcher im aufgewickelten Zustand der Rollobahn (1) vorgespannt ist und dessen Vorspannkraft zum Abwickeln der Rollobahn (1) als Drehmoment wenigstens auf eines der beiden Zahnräder (4), welche mit dem ausziehbaren Rollobahnende (3) verbunden sind, übertragbar ist.

15. Fensterrollo nach Anspruch 14, **dadurch gekennzeichnet, dass** für jedes der beiden Zahnräder (4) ein Federmotor (24) als Antrieb vorgesehen ist.

16. Fensterrollo nach einem der Ansprüche 1 bis 15, **dadurch gekennzeichnet, dass** die beiden Zahnstangen (5) sich im eingebauten Zustand entlang seitlicher Fensterbegrenzungen erstrecken.

17. Fensterrollo nach Anspruch 16, **dadurch gekennzeichnet, dass** eine der beiden Fensterbegrenzungen von einem Fensterteilungssteg (25) zwischen zwei Seitenfenstem des Fahrzeugs gebildet ist.

18. Fensterrollo nach Anspruch 17, **dadurch gekennzeichnet, dass** eine gemeinsame Rollobahn (1) für beide Seitenfenster vorgesehen ist.

19. Fensterrollo nach einem der Ansprüche 14 bis 18, **dadurch gekennzeichnet, dass** die Rollowelle (2), welche hohl ausgebildet ist, drehbar an einer fahrzeugfest lagerbaren Rolloachse (26) gelagert ist.

20. Fensterrollo nach einem der Ansprüche 4 bis 19, **dadurch gekennzeichnet, dass** an der Rolloachse (26) ferner die zweite Seilrolle (9) drehbar gelagert ist, welche über die zwischengeschaltete federelastische Ausgleichseinrichtung (16) mit der Rollowelle (2) mitdrehend verbunden ist.

21. Fensterrollo nach einem der Ansprüche 14 bis 20, **dadurch gekennzeichnet, dass** zwischen der am Federmotor (24) mit dem Zahnrad (4) mitdrehenden ersten Seilrolle (6) und der auf der Rolloachse (26) drehend gelagerten zweiten Seilrolle (9) das Zugelement (8) als Drehmomentübertragungsmittel verläuft.

22. Fensterrollo nach einem der Ansprüche 2 bis 21, **dadurch gekennzeichnet, dass** beim Aufwickeln der Rollobahn (1) auf die Rollowelle (2) das Zugelement (8) von der zweiten Seilrolle (9) abgewickelt und auf die erste Seilrolle (6) aufgewickelt wird.

23. Fensterrollo nach einem der Ansprüche 14 bis 20, **dadurch gekennzeichnet, dass** das Zugelement (8) über eine Umlenkrolle (28), welche im Bereich der oberen Fensterbegrenzung anordenbar ist, geführt ist und am Federmotor (24) befestigt ist.

24. Fensterrollo nach Anspruch 23, **dadurch gekennzeichnet, dass** beim Aufwickeln der Rollobahn (1) auf die Rollowelle (2) das Zugelement (8) vom nach unten bewegten Federmotor (24) über die Umlenkrolle (28) in Richtung zur Rollowelle (2) hin gezogen wird, wobei für einen Antrieb der Rollowelle das Zugelement (8) von der zweiten Seilrolle (9) abgewickelt wird.

25. Fensterrollo nach einem der Ansprüche 14 bis 24, **dadurch gekennzeichnet, dass** der Federmotor (10; 24) eine Spiral- oder Rollfeder (18) aufweist.

26. Fensterrollo nach Anspruch 25, **dadurch gekennzeichnet, dass** die Spiral- oder Rollfeder (18) in einer Federkassette (17) angeordnet ist.

27. Fensterrollo nach Anspruch 26, **dadurch gekennzeichnet, dass** die Federkassette (17) des Federmotors (10; 24) drehfest mit dem Zahnrad (4) verbunden ist.

28. Fensterrollo nach einem der Ansprüche 26 bis 27, **dadurch gekennzeichnet, dass** die gespannte Spiral- oder Rollfeder (18) am ausziehbaren Rollobahnende (3) oder ggf. einem mit dem Starren Rollobahnende verbundenen Schlitten (11) abgestützt ist und auf die Federkassette (17) und dem drehfest damit verbundenen Zahnrad (4) ein Drehmoment ausübt.

29. Fensterrollo nach einem der Ansprüche 26 bis 28, **dadurch gekennzeichnet, dass** das äußere Federende (20) der Spiral- oder Rollfeder (18) mit der Federkassette (17) und das innere Federende (19) mit einer am ausziehbaren Rollobahnende (3) oder dem Schlitten (11) befestigten Achse (22) verbunden ist.

30. Fensterrollo nach Anspruch 26, **dadurch gekennzeichnet, dass** die Federkassette (17) des Federmotors (10; 24) drehfest mit dem ausziehbaren Rollobahnende (3), insbesondere mit dem Schlitten (11) verbunden ist, um welchen das Zahnrad (4) drehbar gelagert ist.

31. Fensterrollo nach einem der Ansprüche 26 oder 30, **dadurch gekennzeichnet, dass** das äußere Federende (20) der Spiral- oder Rollfeder (18) mit der Federkassette (17) und das innere Federende (19) mit dem Zahnrad (4) verbunden sind.

## Claims

1. A window roller blind for a vehicle window with a roller blind shaft (2), a roller blind web (1) able to be wound and unwound on the roller blind shaft (2), a drive arrangement (7), which provides the necessary driving forces for the winding and unwinding of the roller blind web (1), wherein on winding of the roller blind web (1) via the roller blind shaft (2) a retraction force acts on the roller blind web (1) and on unwinding of the roller blind web (1) an extension force acts on the extendable rigid roller blind web end (3), wherein at at least two locations of the rigid roller blind web end (3) respectively a gear wheel (4) is rotatably arranged, and each gear wheel (4) engages into a gear rack (5), fixed to the vehicle, extending in the direction of the roller blind web movement on winding and unwinding,
**characterized in that**
a first pulley (6) is connected in a torque-proof manner with the gear wheel (4), from which a tensioning element (8) is unwound on unwinding of the roller blind web (1).

2. The window roller blind according to claim 1, **characterized in that** a second pulley (9) is provided, onto which the tensioning element (8) is wound on unwinding of the roller blind web (1).

3. The window roller blind according to claim 2, **characterized in that** the roller blind shaft (2) is connected in a co-rotating manner with the second pulley (9).

4. The window roller blind according to one of laims 2 or 3, **characterized in that** between the second pulley (9) and the roller blind shaft (2) a spring-elastic equalizing arrangement (16) is provided, for equalizing the changing spool diameter of the roller blind web (1) on the roller blind shaft (2).

5. The window roller blind according to one of claims 1 to 4, **characterized in that** the rigid roller blind web end (3) is connected with slides (11), which are guided by slide guides (12) running in the direction of movement of the roller blind web (1), and the gear wheels (4) are rotatably mounted on the slides (11).

6. The window roller blind according to one of claims 1 to 5, **characterized in that** for the transmission of the extension force on unwinding of the roller blind web (1), the tensioning element (8) is unwound from the first pulley (6) by the drive arrangement (7).

7. The window roller blind according to one of claims 2 to 6, **characterized in that** the tensioning element (8), which is unwound from the first pulley (6), is wound onto the second pulley (9), which is driven by the drive arrangement (7).

8. The window roller blind according to one of claims 2 to 7, **characterized in that** two second pulleys (9) are provided, which are able to be driven by the drive arrangement (7).

9. The window roller blind according to claim 8, **characterized in that** the two second pulleys (9) are able to be driven by the drive arrangement (7) in both driving directions.

10. The window roller blind according to one of claims 8 or 9, **characterized in that** the two second pulleys (9) are connected in a torque-proof manner with a shared drive shaft (21).

11. The window roller blind according claim 10, **characterized in that in that** the shared drive shaft (21) is arranged within the roller blind shaft (2), constructed as a hollow shaft, and the two second pulleys (9) are fastened to projecting ends of the drive shaft (21).

12. The window roller blind according to one of claims 8 to 11, **characterized in that** the driving force of the drive arrangement (7) is able to be transmitted to the two second pulleys (9) via a brush cable (13).

13. The window roller blind according to claim 12, **characterized in that** by the brush cable (13) the driving force of the drive arrangement (7) is additionally able to be transmitted to a triangular window roller web (14).

14. The window roller blind according to one of claims 1 to 5, **characterized in that** the drive arrangement has at least one spring motor (24), which is pre-stressed in the wound state of the roller blind web (1) and the pre-stressing force of which for unwinding of the roller blind web (1) is able to be transmitted as a torsional moment at least to one of the two gear wheels (4) which are connected with the extendable roller blind web end (3).

15. The window roller blind according to claim 14, **characterized in that** a spring motor (24) is provided as a drive for each of the two gear wheels (4).

16. The window roller blind according to one of claims 1 to 15, **characterized in that** the two gear racks (5) extend in the installed state along lateral window boundaries.

17. The window roller blind according to claim 16, **characterized in that** one of the two window boundaries is formed by a window dividing cross-piece (25) between two side windows of the vehicle.

18. The window roller blind according to claim 17, **characterized in that** a shared roller blind web (1) is provided for both side windows.

19. The window roller blind according to one of claims 14 to 18, **characterized in that** the roller blind shaft (2), which is constructed so as to be hollow, is mounted rotatably on a roller blind axis (26) which is able to be mounted so as to be fixed to the vehicle.

20. The window roller blind according to one of claims 4 to 19, **characterized in that** on the roller blind axis (26) in addition the second pulley (9) is rotatably mounted, which is connected in a co-rotating manner with the roller blind shaft (2) via the interposed spring-elastic equalizing arrangement (16).

21. The window roller blind according to one of claims 14 to 20, **characterized in that** the tensioning element (8) runs as a torque transmission means between the first pulley (6), co-rotating with the gear wheel (4) on the spring motor (24) and the second pulley (9) rotatably mounted on the roller blind axis (26).

22. The window roller blind according to one of claims 2 to 21, **characterized in that** on winding of the roller blind web (1) onto the roller blind shaft (2), the tensioning element (8) is unwound from the second pulley (9) and wound onto the first pulley (6).

23. The window roller blind according to one of claims 14 to 20, **characterized in that** the tensioning element (8) is guided over a deflection roller (28), which is able to be arranged in the region of the upper window boundary and is fastened on the spring motor (24).

24. The window roller blind according to claim 23, **characterized in that** on winding of the roller blind web (1) onto the roller blind shaft (2), the tensioning element (8) is drawn by the downwardly moved spring motor (24) over the deflection roller (28) in the direction towards the roller blind shaft (2), wherein for driving the roller blind shaft the tensioning element (8) is unwound from the second pulley (9).

25. The window roller blind according to one of claims 14 to 24, **characterized in that** the spring motor (10; 24) has a spiral or coil spring (18).

26. The window roller blind according to claim 25, **characterized in that** the spiral or coil spring (18) is arranged in a spring cassette (17).

27. The window roller blind according to claim 26, **characterized in that** the spring cassette (17) of the spring motor (10; 24) is connected in a torque-proof manner with the gear wheel (4).

28. The window roller blind according to one of claim 26 or 27, **characterized in that** the tensioned spiral or coil spring (18) is supported at the extendable roller blind web end (3) or if applicable at a slide (11) connected with the rigid roller blind web end, and exerts a torsional moment on the spring cassette (17) and the gear wheel (4) connected in a torque-proof manner therewith.

29. The window roller blind according to one of claims 26 to 28, **characterized in that** the outer spring end (20) of the spiral or coil spring (18) is connected with the spring cassette (17), and the inner spring end (19) is connected with an axis (22) fastened to the extendable roller blind web end (3) or to the slide (11).

30. The window roller blind according to claim 26, **characterized in that** the spring cassette (17) of the spring motor (10; 24) is connected in a torque-proof manner with the extendable roller blind web end (3), in particular with the slide (11), about which the gear wheel (4) is rotatably mounted.

31. The window roller blind according to claim 26 or 30, **characterized in that** the outer spring end (20) of the spiral or coil spring (18) is connected with the spring cassette (17), and the inner spring end (19) is connected with the gear wheel (4).

## Revendications

1. Store de fenêtre pour fenêtre de véhicule comportant un axe d'enroulement (2), un panneau de store (1) enroulable et déroulable sur l'axe d'enroulement (2), un dispositif d'entraînement (7), qui délivre les forces d'entraînement requises pour l'enroulement et le déroulement du panneau de store (1), où lors de l'enroulement du panneau de store (1) sur l'axe d'enroulement (2) une force de rentrage agit sur le panneau de store (1) et lors du déroulement du panneau de store (1) une force de déploiement agit sur l'extrémité (3) rigide du panneau de store à déployer, où à au moins deux emplacements de l'extrémité (3) rigide du panneau de store une roue dentée (4) est respectivement disposée rotativement et chaque roue dentée (4) s'interpose dans une barre crantée (5) fixe sur le véhicule s'étendant dans la direction du mouvement du panneau de store lors de l'enroulement et du déroulement,
**caractérisé en ce que**
une première poulie (6) est reliée de manière solidaire en rotation à la roue dentée (4), de laquelle lors du déroulement du panneau de store (1) un élément de traction (8) est déroulé.

2. Store de fenêtre selon la revendication 1, **caractérisé en ce que** une deuxième poulie (9) est prévue, sur laquelle l'élément de traction (8) est enroulé lors du déroulement du panneau de store (1).

3. Store de fenêtre selon la revendication 2, **caractérisé en ce que** l'axe d'enroulement (2) est relié corotativement à la deuxième poulie (9).

4. Store de fenêtre selon une des revendications 2 ou 3, **caractérisé en ce que** entre la deuxième poulie (9) et l'axe d'enroulement (2) un dispositif de compensation (16) élastique à ressort pour compenser le diamètre d'enroulement variable du panneau de store (1) est prévu sur l'axe d'enroulement (2).

5. Store de fenêtre selon une des revendications 1 à 4, **caractérisé en ce que** l'extrémité rigide (3) de panneau de store est reliée à des coulisseaux (11), qui sont guidés par des glissières (12) s'étendant dans la direction de mouvement du panneau de store (1), et les roues dentées (4) sont positionnées rotativement sur les coulisseaux (11).

6. Store de fenêtre selon une des revendications 1 à 5, **caractérisé en ce que** pour transmettre la force de déploiement lors du déroulement du panneau de store (1) l'élément de traction (8) est déroulé du dispositif d'entraînement (7) par la première poulie (6).

7. Store de fenêtre selon une des revendications 2 à 6, **caractérisé en ce que** l'élément de traction (8) déroulé de la première poulie (6) est enroulé sur la deuxième poulie (9), qui est entraînée par le dispositif d'entraînement (7).

8. Store de fenêtre selon une des revendications 2 à 7, **caractérisé en ce que** deux deuxièmes poulies (9), qui peuvent être entraînées par le dispositif d'entraînement (7), sont prévues.

9. Store de fenêtre selon la revendication 8, **caractérisé en ce que** les deux deuxièmes poulies (9) peuvent être entraînées dans les deux directions d'entraînement par le dispositif d'entraînement (7).

10. Store de fenêtre selon une des revendications 8 ou 9, **caractérisé en ce que** les deux deuxièmes poulies (9) sont reliées de manière solidaire en rotation à un arbre d'entraînement (21) commun.

11. Store de fenêtre selon la revendication 10, **caractérisé en ce que** l'arbre d'entraînement commun (21) est disposé à l'intérieur de l'axe d'enroulement (2) réalisé comme un arbre creux et les deux deuxièmes poulies (9) sont fixées sur des extrémités en saillie de l'arbre d'entraînement (21).

12. Store de fenêtre selon une des revendications 8 à 11, **caractérisé en ce que** la force d'entraînement du dispositif d'entraînement (7) peut être transmise par l'intermédiaire d'un câble balai (13) aux deux deuxièmes poulies (9).

13. Store de fenêtre selon la revendication 12, **caractérisé en ce qu'**avec le câble balai (13) la force d'entraînement du dispositif d'entraînement (7) peut en outre être transmise à un store de fenêtre de vitre de custode (14).

14. Store de fenêtre selon une des revendications 1 à 5, **caractérisé en ce que** le dispositif d'entraînement présente au moins un moteur à ressort (24), qui est précontraint dans l'état roulé du panneau de store (1) et dont la force de précontrainte pour dérouler le panneau de store (1) peut être transmise comme couple de rotation au moins à une des deux roues dentées (4), qui sont reliées à l'extrémité de panneau de store (3) déployable.

15. Store de fenêtre selon la revendication 14, **caractérisé en ce que** pour chacune des deux roues dentées (4) un moteur à ressort (24) est prévu comme entraînement.

16. Store de fenêtre selon une des revendications 1 à 15, **caractérisé en ce que** les deux barres crantées (5) s'étendent en l'état monté le long de limitations de fenêtre latérales.

17. Store de fenêtre selon la revendication 16, **caractérisé en ce que** une des deux limitations de fenêtre est formée par un gradin de division de fenêtre (25) entre deux fenêtres latérales du véhicule.

18. Store de fenêtre selon la revendication 17, **caractérisé en ce que** un panneau de store commun (1) est prévu pour les deux fenêtres latérales.

19. Store de fenêtre selon une des revendications 14 à 18, **caractérisé en ce que** l'axe d'enroulement (2), qui a une configuration creuse, est positionné rotativement sur un axe de store (26) positionnable fixement sur le véhicule.

20. Store de fenêtre selon une des revendications 4 à 19, **caractérisé en ce que** la deuxième poulie (9) est en outre positionnée rotativement sur l'axe de store (26), laquelle est reliée corotativement à l'axe d'enroulement (2) par le dispositif de compensation (16) élastique à ressort.

21. Store de fenêtre selon une des revendications 14 à 20, **caractérisé en ce que** entre la première poulie (6) corotative avec la roue dentée (4) sur le moteur à ressort (24) et la deuxième poulie (9) positionnée rotativement sur l'axe de store (26) s'étend l'élément de traction (8) en tant que moyen de transmission du couple de rotation.

22. Store de fenêtre selon une des revendications 2 à 21, **caractérisé en ce que** lors de l'enroulement du panneau de store (1) sur l'axe d'enroulement (2) l'élément de traction (8) est déroulé par la deuxième poulie (9) et est enroulé par la première poulie (6).

23. Store de fenêtre selon une des revendications 14 à 20, **caractérisé en ce que** l'élément de traction (8) est guidé par un rouleau de renvoi (28), qui peut être disposé au niveau de la limitation de fenêtre supérieure, et est fixé sur le moteur à ressort (24).

24. Store de fenêtre selon la revendication 23, **caractérisé en ce que** lors de l'enroulement du panneau de store (1) sur l'axe d'enroulement (2) l'élément de traction (8) est tiré par le moteur à ressort (24) mis en mouvement vers le bas par le rouleau de renvoi (28) dans la direction de l'axe d'enroulement (2), où en vue d'un entraînement de l'axe d'enroulement l'élément de traction (8) est déroulé de la deuxième poulie (9).

25. Store de fenêtre selon une des revendications 14 à 24, **caractérisé en ce que** le moteur à ressort (10; 24) présente un ressort de rouleau ou en spirale (18).

26. Store de fenêtre selon la revendication 25, **caractérisé en ce que** le ressort de rouleau ou en spirale (18) est disposé dans une cassette à ressort (17).

27. Store de fenêtre selon la revendication 26, **caractérisé en ce que** la cassette à ressort (17) du moteur à ressort (10; 24) est reliée de manière solidaire en rotation à la roue dentée (4).

28. Store de fenêtre selon la revendication 26 ou 27, **caractérisé en ce que** le ressort de rouleau ou en spirale (18) tendu est appuyé sur l'extrémité de panneau de store (3) déployable ou le cas échéant sur un coulisseau (11) relié à l'extrémité de panneau de store rigide et exerce un couple de rotation sur la cassette à ressort (17) et la roule dentée (4) reliée de manière solidaire en rotation à celle-ci.

29. Store de fenêtre selon une des revendications 26 à 28, **caractérisé en ce que** l'extrémité de ressort extérieure (20) du ressort de rouleau ou en spirale (18) est reliée à la cassette à ressort (17) et l'extrémité de ressort intérieure (19) est reliée à un axe (22) fixé sur le de panneau de store déployable (3) ou au coulisseau (11).

30. Store de fenêtre selon la revendication 26, **caractérisé en ce que** la cassette à ressort (17) du moteur à ressort (10; 24) est reliée de manière solidaire en rotation à l'extrémité de panneau de store déployable (3), notamment au coulisseau (11), autour duquel la roue dentée (4) est positionnée rotativement.

31. Store de fenêtre selon la revendication 26 ou 30, **caractérisé en ce que** l'extrémité de ressort extérieure (20) du ressort de rouleau ou en spirale (18) est reliée à la cassette à ressort (17) et l'extrémité de ressort intérieure (19) est reliée à la roue dentée (4).
